(19) Europäisches Patentamt
European Patent Office
Office européen des brevets

(11) EP 2 905 862 A1

(12) EUROPEAN PATENT APPLICATION
published in accordance with Art. 153(4) EPC

(43) Date of publication:
12.08.2015 Bulletin 2015/33

(51) Int Cl.:
H02J 3/00 $^{(2006.01)}$     G06Q 50/06 $^{(2012.01)}$

(21) Application number: 13843429.5

(86) International application number:
PCT/JP2013/076680

(22) Date of filing: 01.10.2013

(87) International publication number:
WO 2014/054628 (10.04.2014 Gazette 2014/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 02.10.2012 JP 2012220164

(71) Applicant: Kabushiki Kaisha Toshiba
Minato-ku
Tokyo 105-8001 (JP)

(72) Inventors:
• NODA, Hideki
Tokyo 105-8001 (JP)
• OBARA, Reiko
Tokyo 105-8001 (JP)
• MORIMOTO, Takashi
Tokyo 105-8001 (JP)
• KIYA, Genki
Tokyo 105-8001 (JP)

(74) Representative: Hoffmann Eitle
Patent- und Rechtsanwälte PartmbB
Arabellastraße 30
81925 München (DE)

(54) POWER GENERATION PLAN FORMULATION SYSTEM FOR SMALL-SCALE POWER SYSTEM AND METHOD THEREFOR

(57)     A power generation plan creating system and a method thereof which can create an optimized operation plan with a power quality being as a parameter in a small-scale power system are provided. A power generation plan creating system includes a condition setting unit setting a time slot of a power generation plan, a power-quality-condition setting unit setting a condition for a frequency fluctuation and for a voltage fluctuation to set a power quality condition, a power generation plan calculating unit setting an operation cost based on the set time slot of the power generation plan and power quality, a blackout rate calculating unit calculating a blackout rate for each blackout time, a risk calculating unit calculating a blackout risk based on the blackout rate, and a whole cost integrating unit totaling the blackout risk and the operation cost to integrate a whole cost for each power quality.

POWER GENERATION PLAN CREATING SYSTEM
OF FIRST EMBODIMENT

*FIG. 1*

**Description**

TECHNICAL FIELD

The embodiments of the present disclosure relates to a power generation plan creating system and a method thereof that consider an adverse effect when a power quality is changed.

BACKGROUND ART

When, in Japan, a change in circumstances of electricity businesses like separation of electric transmission/electric distribution advances in future or when a business in a newly developing country is taken into consideration, if the power quality (i.e., a frequency fluctuation and a voltage fluctuation) can be uniquely set at a power feeding instruction center, etc. , of a small-scale power system like a smart grid in accordance with local needs and actual conditions, a further reduction of power generation costs is enabled.

CITATION LIST

PATENT LITERATURES

Patent Document 1: JP 4435101 B

SUMMARY

TECHNICAL PROBLEM

However, a power generation plan is so far created based on a presumption that the power quality is within a certain value, and a power generation plan with a change in power quality has not been created, and setting of the optimized power quality has not been performed so far.
An objective of the embodiments of the present disclosure is to provide a power generation plan creating system and a method thereof which can create an optimized power generation plan using a power quality as a parameter in a small-scale power system.

SOLUTION TO PROBLEM

To accomplish the above objective, a power generation plan creating system according to embodiments of the present disclosure is for a small-scale power system, and the power generation plan creating system includes: a condition setting unit setting a time slot of a power generation plan; a power-quality-condition setting unit setting a condition for a frequency fluctuation and for a voltage fluctuation to set a power quality condition; a power generation plan calculating unit setting an operation cost based on the set time slot of the power generation plan and power quality; a blackout rate calculating unit calculating a blackout rate for each blackout time; a risk calculating unit calculating a blackout risk through a predetermined calculation formula based on the blackout rate calculated by the blackout rate calculating unit; and a whole cost integrating unit totaling the blackout risk obtained by the risk calculating unit and the operation cost obtained by the power generation plan calculating unit to integrate a whole cost for each power quality.
In addition, a power generation plan creating method according to embodiment of the present disclosure is for a small-scale power system, and the power generation plan creating method includes: a condition setting step of setting a time slot of a power generation plan; a power-quality-condition setting step of setting a condition for a frequency fluctuation and for a voltage fluctuation to set a power quality condition; a power generation plan calculating step of setting an operation cost based on the set time slot of the power generation plan and power quality; a blackout rate calculating step of calculating a blackout rate for each blackout time; a risk calculating step of calculating a blackout risk through a predetermined calculation formula based on the blackout rate calculated through the blackout rate calculating step; a whole cost integrating step of totaling the blackout risk obtained through the risk calculating step and the operation cost obtained through the power generation plan calculating step to integrate a whole cost for each power quality; and a whole cost minimizing condition outputting step of selecting and outputting a power quality condition that minimizes the whole cost based on whole costs calculated power quality by power quality through the whole cost integrating step.

BRIEF DESCRIPTION OF DRAWINGS

FIG. 1 is a block diagram illustrating a configuration of a power generation plan creating system according to a first embodiment;

FIG. 2 is a flowchart illustrating procedures of a power generation plan creating method of the first embodiment;

FIG. 3 is a graph illustrating characteristics representing a relationship between a frequency fluctuation allowable range and a blackout rate for each blackout time, and characteristics representing a voltage fluctuation allowable range and a blackout rate for each blackout time;

FIG. 4 is a block diagram illustrating a configuration of a power generation plan creating system according to a second embodiment;

FIG. 5 is a block diagram illustrating a configuration of a power generation plan creating system according to a third embodiment;

FIG. 6 is a block diagram illustrating a configuration of a power generation plan creating system according to a fourth embodiment;

FIG. 7 is a graph illustrating a relationship between a frequency fluctuation and a time, and a relationship between a voltage fluctuation and a time;

FIG. 8 is a block diagram illustrating a configuration of a power generation plan creating system according to a fifth embodiment; and

FIG. 9 is a block diagram illustrating a configuration of a power generation plan creating system according to a sixth embodiment.

## DESCRIPTION OF EMBODIMENTS

Specific embodiments of the present disclosure will be explained below with reference to the figures.

[First Embodiment]

(Configuration)

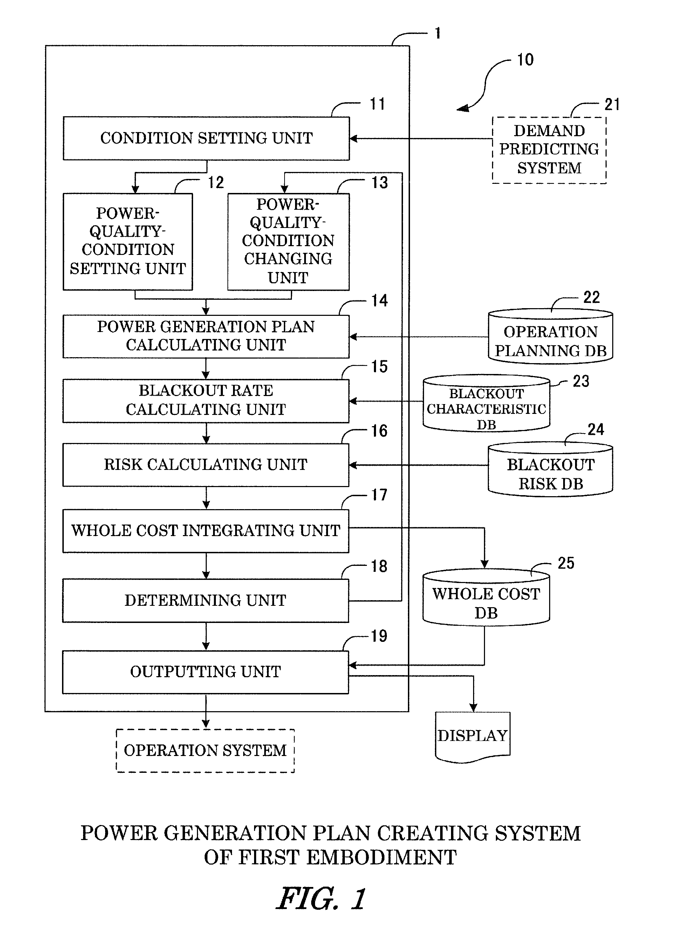

FIG. 1 illustrates a configuration of a power generation plan creating system according to a first embodiment.

A power generation plan creating system 10 of this embodiment includes, in a main block 1, a condition setting unit 11 that sets a time slot, etc., at which a user desires a planning, a power-quality-condition setting unit 12 that sets, for a frequency fluctuation and for a voltage fluctuation, upper/lower limit values, fluctuation range, and a calculation start condition, respectively, a power-quality-condition changing unit 13 that changes those conditions, and a power-generation-plan calculating unit 14 that sets operation costs based on the set planning time slot and power quality.

In addition, the main block 1 includes a blackout rate calculating unit 15 that calculates a blackout rate for each blackout time, a risk calculating unit 16 that calculates a risk using a predetermined calculation formula, a whole cost integrating unit 17 that adds the blackout risk obtained by the risk calculating unit 16 and the operation costs obtained by the power-generation-plan calculating unit 14 to integrate the whole costs, a determining unit 18 that determines whether or not to complete a calculation based on the condition set by the power-quality-condition setting unit 12, and an outputting unit 19 that selects and outputs a power quality condition which minimizes the whole costs.

Still further, the power generation plan creating system 10 is capable of utilizing an external demand predicting system 21. Moreover, the power generation plan creating system includes, as external databases, an operation planning DB 22, a blackout characteristic DB 23, a blackout risk DB 24, and a whole cost DB 25.

The demand predicting system 21 is a system that supplies power generation amount information to the condition setting unit 11. The operation planning DB 22 stores information to be utilized by the power-generation-plan calculating unit 14, and stores, for example, power generator performance information, such a power generation amount, a time, and weather information, facility constraint information, such as the number of activations/deactivations of a power generator, a track constraint, and a minimum electric accumulation amount, and prediction information, such as weather information and a singularity.

The blackout characteristic DB 23 stores data to be utilized by the blackout rate calculating unit 15, and stores characteristics representing a relationship between a frequency fluctuation allowable range and a blackout rate for each blackout time, and characteristics representing a relationship between a voltage fluctuation allowable range and a blackout rate for each blackout time.

The blackout risk DB 24 stores data to be utilized by the risk calculating unit 16, and stores a total damage compensation amount per a blackout time determined according to each time. The whole cost DB 25 stores data on whole costs for each power quality calculated by the whole cost integrating unit 17.

(Power Generation Plan Creating Method)

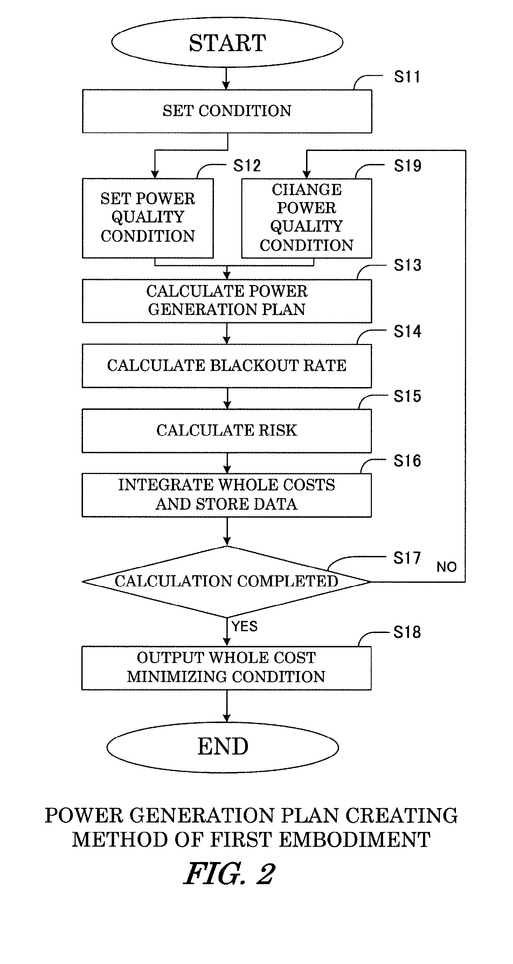

An explanation will now be given of a method for creating a power generation plan through the power generation plan creating system 10 employing the above-explained configuration with reference to FIG. 2.

(Step S11: Condition Setting Step)

First, when the condition setting unit 11 sets a time slot at which the user of this apparatus desires a planning, the condition setting unit 11 obtains scheduled power generation amount information regarding the set time from the external demand predicting system 21. Example scheduled power generation amount information is expressed as "from Month A, Day B, Hour C, Minute D to Month E, Day F, Hour G, and Minute H: II kWh".

(Step 12: Power Quality Condition Setting Process)

Next, the power-quality-condition setting unit 12 sets, for each of the frequency fluctuation and the voltage fluctuation that are the barometers of the power quality, an allowable amount in accordance with a time slot (voltage fluctuation ($\pm$) allowable range and a frequency fluctuation ($\pm$) allowable range. The unit is % or Hz and kV), and the upper or lower limit value of allowable level to start a calculation, and, an margin of the allowable level.

(Step S13: Power Generation Plan Calculating Step)

The power-generation-plan calculating unit 14 sets operation costs that minimizes a power generation unit price based on the power generator performance information, the facility constraint information, and prediction information all obtained from the operation planning DB 22, with reference to the set planning time slot and the initial value of the power quality (i.e., the voltage fluctuation allowable range and the frequency fluctuation allowable range at the time of the start of the calculation both set by the power-quality-condition setting unit 12). When the operation costs are set so as to minimize the power generation unit price, e.g., the conventionally well-known scheme disclosed in Patent Document 1 is applicable.

(Step S14: Blackout Rate Calculating Step)

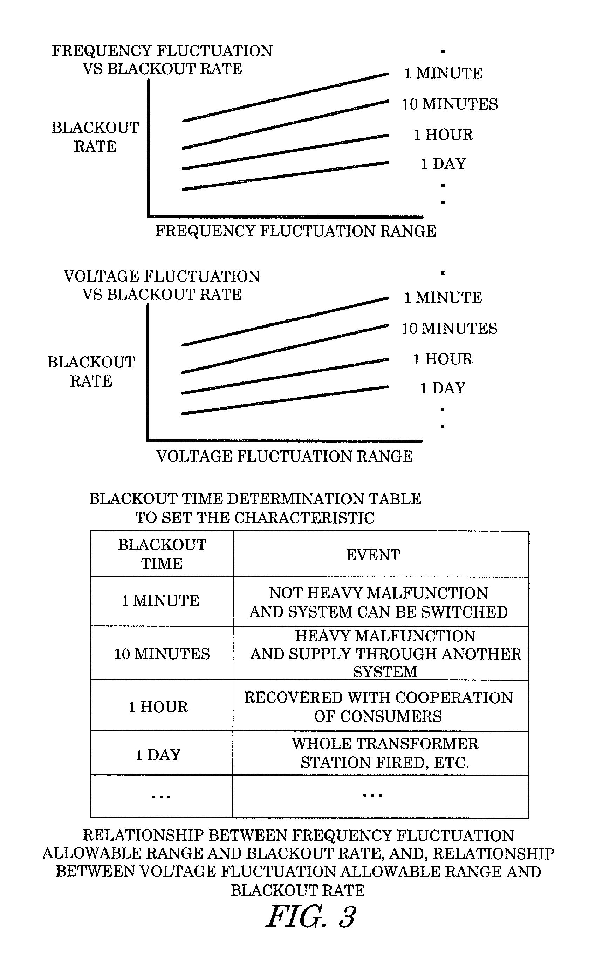

Next, the blackout rate calculating unit 15 checks characteristic data stored in the blackout characteristic DB 23 in advance to calculate the blackout rate for each blackout time.
As illustrated in FIG. 3, the blackout characteristic DB 23 stores data on, for example, characteristics representing a relationship between the frequency fluctuation allowable range and a blackout rate for each blackout time, and characteristics representing a relationship between the voltage fluctuation allowable range and a blackout rate for each blackout time. In addition, the blackout characteristic DB 23 also stores data on a blackout time determination table that associates a blackout time with an event in order to set the aforementioned characteristics.
In this case, example applicable data that can be stored in the blackout characteristic DB 23 is characterized data through a malfunction simulation using a simulation model which simulates a system configuration in advance. In addition, when a blackout time is set based on a simulation result, the blackout time may be set in accordance with criterion including the blackout time determination table illustrated in FIG. 3. Next, the blackout rate due to a frequency fluctuation and the blackout rate due to a voltage fluctuation are compared with each other for each blackout time, and the higher blackout rate is set to be the blackout rate corresponding to the blackout time.

(Step S15: Risk Calculating Step)

The risk calculating unit 16 calculates a risk by multiplying the blackout rate for each blackout time by a damage compensation amount that is set in accordance with that blackout time. As to the calculation formula of the risk, the following formula (1) is applicable.

[Formula 1]

$$\text{RISK} = \sum_{\text{BLACKOUT TIME } n} (\text{WHOLE DAMAGE COMPENSATION AMOUNT(YEN)}_{\text{BLACKOUT TIME } n} \times \text{BLACKOUT RATE(TIMES)}_{\text{BLACKOUT TIME } n})$$

$$\cdots \cdots (1)$$

$$\text{WHOLE DAMAGE COMPENSATION AMOUNT} = \sum_{\text{CONSUMERm}} (\text{DAMAGE COMPENSATION AMOUNT(YEN)}_{\text{CONSUMERm}})$$

In this case, a blackout time n is an assumed blackout time, and can be set as, for example, n = 1 second, 5 seconds, 10 seconds, 1 minute, 10 minutes, 1 hour, ... and 1 day, and the like. In addition, a consumer m represents the total consumers subjected to damage compensation due to a blackout.

The risk calculating unit 16 obtains the risk for each blackout time n through the above-explained formula (1), and accumulates the calculated risks. Information necessary for the calculation is stored in advance in the blackout risk DB 24. Data stored in the blackout risk DB 24 is a total damage compensation amount per a blackout time determined according to each time. As is indicated by the calculation formula (1), this amount is a value obtained by adding the damage compensation amounts of all consumers who are connected to a target system.

In this case, the damage compensation amount differs consumer by consumer and time by time. In the case of, for example, a hospital or a stock market that has a large impact to a society, the damage compensation amount is large. In general, various companies are running their own businesses in the daytime, and thus the damage compensation amount to a blackout is large, but is small in the night. Still further, the damage compensation amount differs depending on the season and the day like the year-end and new-year season and the end of a month with a large number of accountings. This amount should be set in advance based on a research result of a past example damage compensation case, etc.

As an example, it can be set that "in a time slot A-B in a weekday, total damage compensation amount is JP AA YEN/minute per a blackout time, and the breakdown thereof is that, first consumer: JP BB YEN/minute; second consumer: JP CC YEN/minute, and the like", "in a time slot C-D in a weekday, total damage compensation amount is JP DD YEN/minute per a blackout time, and the breakdown thereof is that, first consumer: JP EE YEN/minute; second consumer: JP DD YEN/minute, and the like".

(Step S16: Whole Cost Integrating and Data Storing Step)

Next, the whole cost integrating unit 17 adds the risk due to a blackout which is obtained by the risk calculating unit 16 in accordance with the power quality and the operation costs obtained by the power-generation-plan calculating unit 14 to integrate the whole costs, and stores the integrated data in the whole cost DB 25.

(Step S17 : Calculation Completion Determining Step)

The determining unit 18 determines whether or not to complete the calculation for all cases under the condition set by the power-quality-condition setting unit 12. When the calculation has not been completed yet (step S17: NO), the power-quality-condition changing unit 13 adds or subtracts the margin set by the power-quality-condition setting unit 12 relative to the voltage fluctuation allowable range and the frequency fluctuation allowable range calculated right before, thereby changing (step S19) the power quality condition. Subsequently, the processes subsequent to the step S13 are repeated.

(Step S18: Whole Cost Minimizing Condition Output Step)

Conversely, when the determining unit 18 determines (step S17: YES) that the calculation has been completed, the outputting unit 19 refers to the whole costs for each power quality stored in the whole cost DB 25, and selects and outputs the power quality condition that minimizes the whole costs.

(Advantageous Effects)

The power generation plan creating system 10 of this embodiment enables a creation of a power generation plan with details, such as for each time slot, and for each singular dayincluding a holiday, a weekday, and a long holiday season. For example, for a time slot like the night at which a blackout risk is small, a power generation plan for decreasing the power quality and also decreasing the whole costs can be created.

Therefore, it becomes possible to make an operation plan that minimizes the whole costs which include the costs of a blackout risk that is in a trade-off relationship with the power quality, and the operation costs.

[Second Embodiment]

(Configuration)

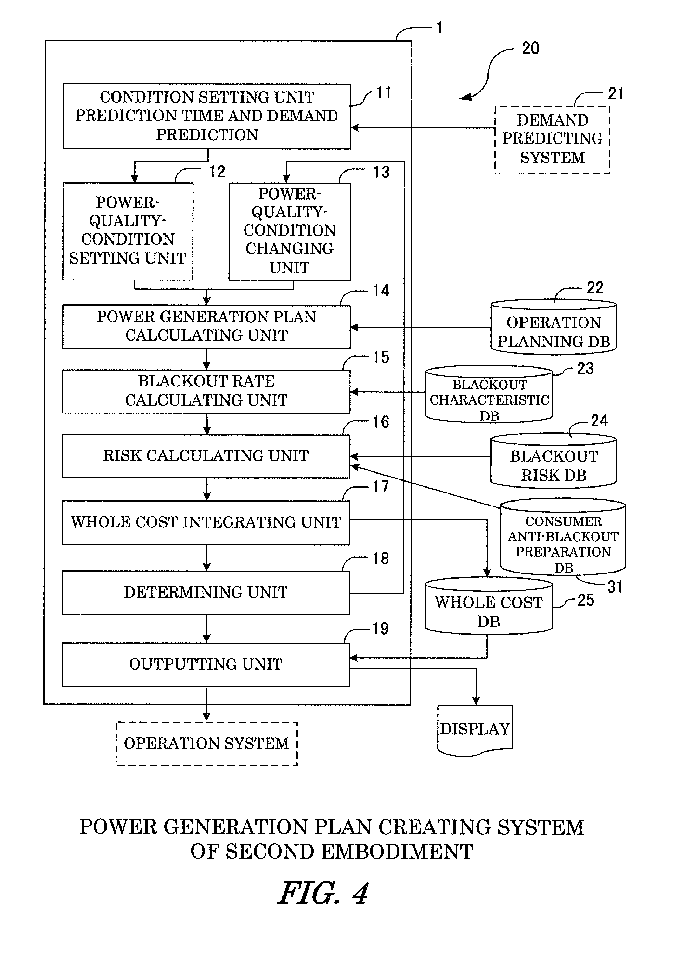

FIG. 4 illustrates a configuration of a power generation plan creating system according to a second embodiment. In this case, the same structural element as that of the first embodiment will be denoted by the same reference numeral, and the duplicated explanation thereof will be omitted.

A power generation plan creating system 20 of this embodiment employs the same configuration as that of the power generation plan creating system 10 of the first embodiment except that a consumer anti-blackout preparation DB 31 to be utilized by the risk calculating unit 16 is provided outside the main block 1.

The consumer anti-blackout preparation DB 31 stores, as information researched in advance, data relevant to a risk reduction, such as the presence/absence of an uninterruptable power source (UPS) device, a UPS backup time, the presence/absence of batteries, and battery remaining level information (e.g. , the capacity and the SOC secured level %).

The power generation plan creating system 20 performs, in the risk calculating step of the step S15, a calculation by the risk calculating unit 16 in consideration of a risk reduction using the consumer anti-blackout preparation DB 31. A risk calculation formula of this embodiment can be expressed as the following formula (2).

[Formula 2]

$$\text{RISK} = \sum_{\text{BLACKOUT TIME } n} (\text{WHOLE DAMAGE COMPENSATION AMOUNT(YEN)}_{\text{BLACKOUT TIME } n} \times \text{BLACKOUT RATE(TIMES)}_{\text{BLACKOUT TIME } n})$$

$$\cdots\cdots(2)$$

$$\text{WHOLE DAMAGE COMPENSATION AMOUNT} = \sum_{\text{CONSUMER } m} (\text{DAMAGE COMPENSATION AMOUNT(YEN)}_{\text{CONSUMER } m} \times \text{AVOIDANCE COEFFICIENT}_{\text{CONSUMER } m})$$

In this case, a blackout time n is an assumed blackout time, an can be set as, for example, n = 1 second, 5 seconds, 10 seconds, 1 minute, 10 minutes, 1 hour, ... 1 day, and the like. In addition, a consumer m represents a total consumers subjected to a blackout damage compensation.

When compared with the formula (1) of the first embodiment, the formula (2) differs therefrom that an avoidance coefficient is set. The avoidance coefficient becomes "0" when a consumer carries out a complete blackout avoiding preparation, becomes "1" when no preparation is carried out, and becomes a coefficient between 0 to 1 when a preparation contains an uncertainty. When the uncertainty to avoid a blackout is expressed as a blackout avoidance achievement rate by a probability, the avoidance coefficient becomes "1 - blackout avoidance achievement rate".

(Advantageous Effects)

The power generation plan creating system 20 of this embodiment considers consumer anti-blackout preparation information in the risk calculating step of the step S15, enabling a risk reduction in accordance with an anti-blackout preparation by the consumer. Hence, when a power supplier further reduces the power quality, the power generation costs can be further suppressed.

(Third Embodiment)

(Configuration)

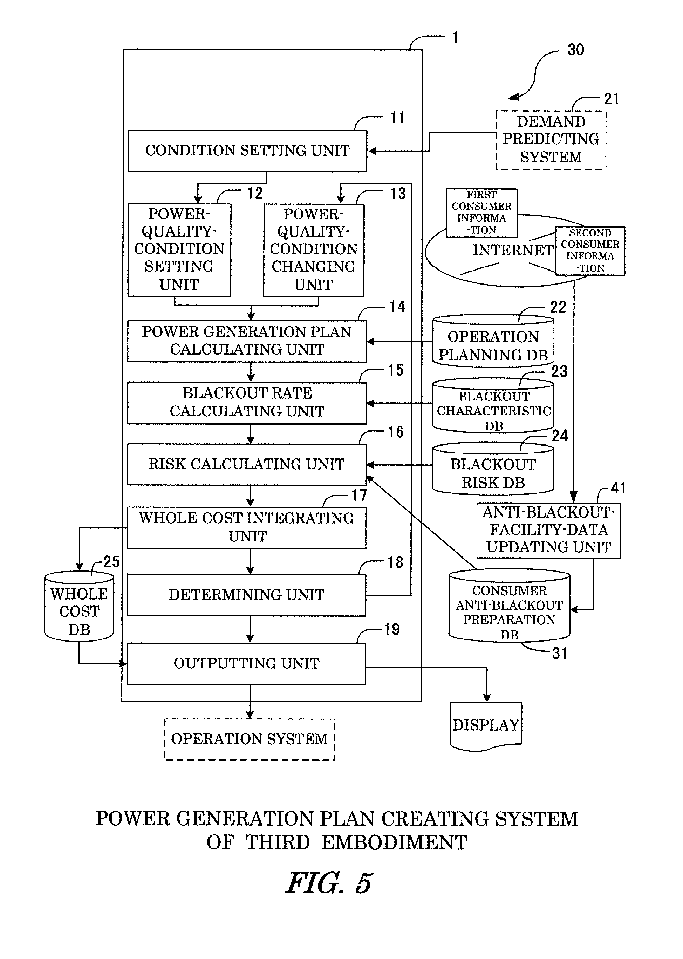

FIG. 5 illustrates a configuration of a power generation plan creating system according to a third embodiment. The same structural element as that of the first or second embodiment will be denoted by the same reference numeral, and the duplicated explanation thereof will be omitted.

A power generation plan creating system 30 of this embodiment employs the same configuration as that of the power generation plan creating system 20 of the second embodiment except that an anti-blackout-facility-data updating unit 41 that automatically updates data relative to the consumer anti-blackout preparation DB 31 is provided outside the main block 1.

The anti-blackout-facility-data updating unit 41 has a function of automatically updating information stored in the consumer anti-blackout preparation DB 31. More specifically, pieces of data on, for each consumer, a UPS backup time (h), and a battery SOC set level (%), and the like are acquired online through a communication line like the Internet. As to the acquisition timing, a consumer may transmit pieces of data, or the anti-blackout-facility-data updating unit 41 may periodically check the data storage of a consumer, and may update the data when there is a change in data contents. Hence, anti-blackout-facility data for each consumer can be updated to the latest information. In addition, operation plan information on, for example, batteries including time information may be obtained from the consumer to update the data contents.

(Advantageous Effects)

According to the power generation plan creating system 30 of this embodiment, the anti-blackout-facility-data updating unit 41 automatically updates data stored in the consumer anti-blackout preparation DB 31 to the latest information. Therefore, an anti-blackout preparation by the consumer can be precisely reflected on the operation plan.

[Fourth Embodiment]

(Configuration)

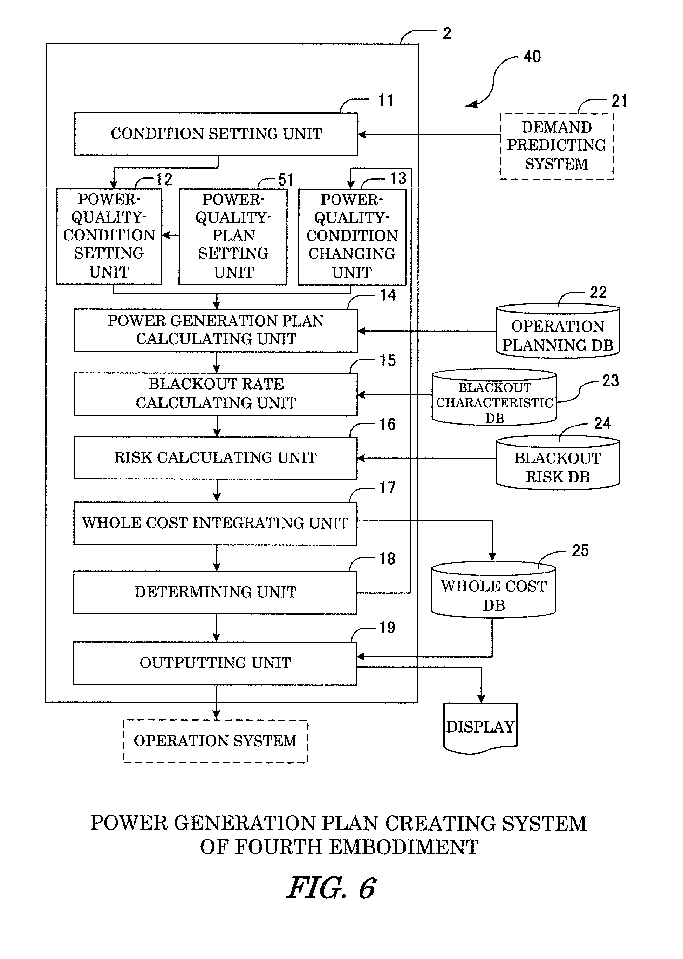

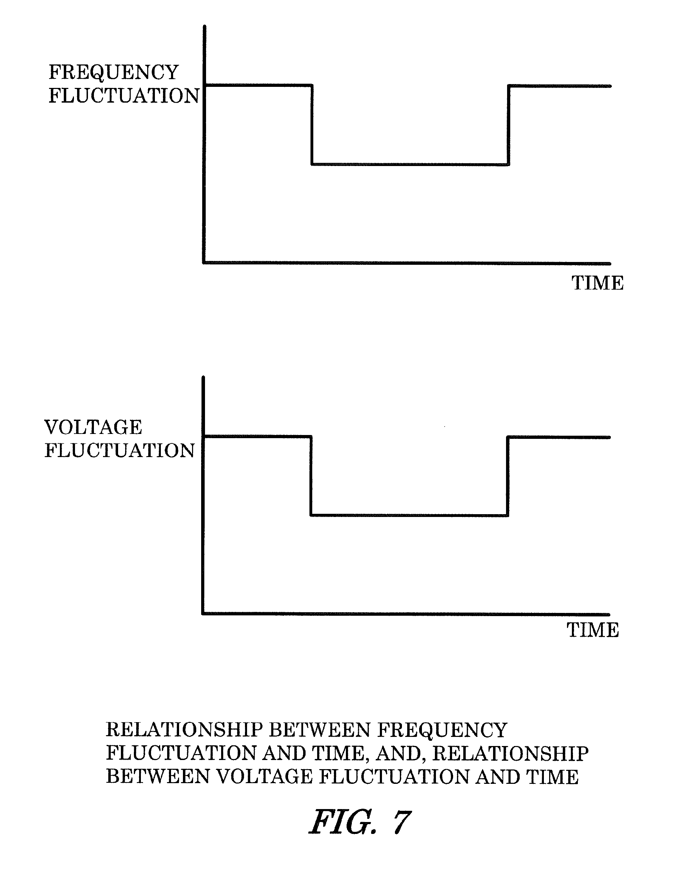

FIG. 6 illustrates a configuration of a power generation plan creating system according to a fourth embodiment. The same structural element as that of the above-explained embodiment will be denoted by the same reference numeral, and the duplicated explanation thereof will be omitted.
A power generation plan creating system 40 of this embodiment employs the same configuration as that of the power generation plan creating system 10 of the first embodiment except that, right next to the power-quality-condition setting unit 12, a power-quality-plan setting unit 51 is provided which sets in advance the lower limit value of the power quality for each time slot.
The power-quality-plan setting unit 51 sets, for each of the frequency fluctuation and the voltage fluctuation, the lower limit value of the fluctuation allowable amount as illustrated in, for example, FIG. 7. The fluctuation allowable amount may be set through a function formula which has a time as a parameter.

(Advantageous Effects)

According to the power generation plan creating system 40 of this embodiment, the power-quality-plan setting unit 51 in a main block 2 sets the lower limit value of the power quality in advance for each time slot, thereby enabling to make an operation plan based on consumer needs. For example, an operation plan that increases the power quality only during the daytime of a weekday at which factories are in operation can be made.

[Fifth Embodiment]

(Configuration)

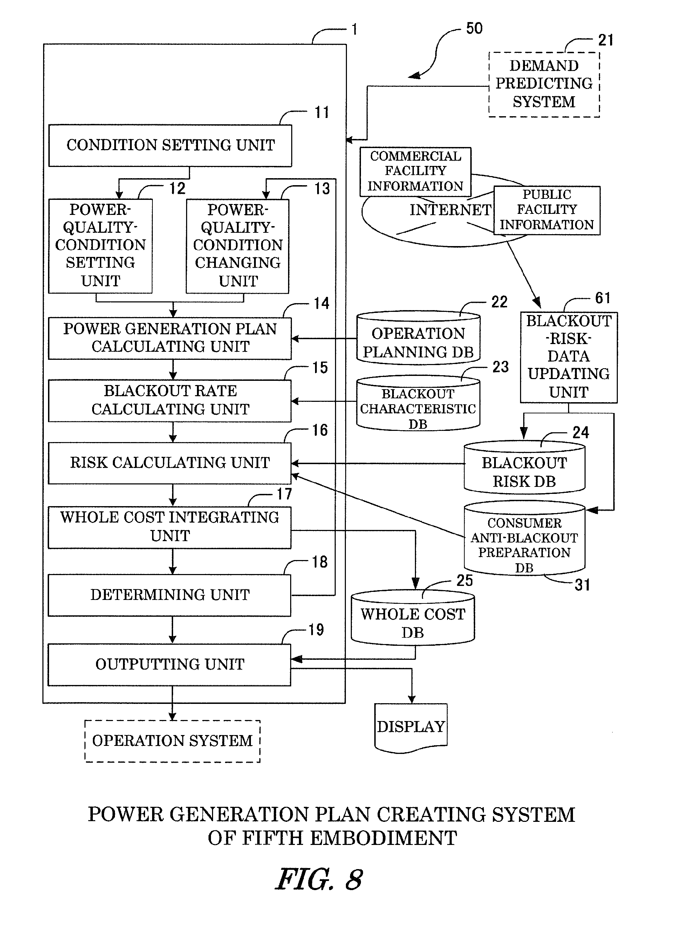

FIG. 8 illustrates a configuration of a power generation plan creating system according to a fifth embodiment. The same structural element as that of the above-explained embodiment will be denoted by the same reference numeral, and the duplicated explanation thereof will be omitted.
A power generation plan creating system 50 of this embodiment employs the same configuration as that of the power generation plan creating system 20 of the second embodiment except that a blackout-risk-data updating unit 61 that periodically and automatically updates registered information in the blackout risk DB 24 and in the consumer anti-blackout preparation DB 31 is provided outside the main block 1.
The blackout-risk-data updating unit 61 automatically updates the damage compensation amount at the time of a blackout which changes in accordance with, for example, a local development. More specifically, information relevant to a change in the blackout risk calculation condition, such as tenants currently occupying a local commercial facility, and a new construction of a hospital or a school, is acquired online through a communication line like the Internet from an organization like an autonomous community. As to the acquisition timing, a consumer may transmit data, or the blackout-risk-data updating unit 61 may periodically checks the data storage, and may update the data when there is a change in data contents. Hence, the registered information in the blackout risk DB 24 and in the consumer anti-blackout preparation DB 31 can be periodically updated to the latest information. In addition, an update plan that contains time information may be acquired from the consumer to update the data.

(Advantageous Effects)

According to the power generation plan creating system 50 of this embodiment, the blackout-risk-data updating unit 61 automatically updates the blackout risk information. Hence, when, for example, a hospital is newly constructed or when there is a change in tenants which are currently occupying a commercial facility, the damage compensation amount can be easily corrected.

[Sixth Embodiment]

(Configuration)

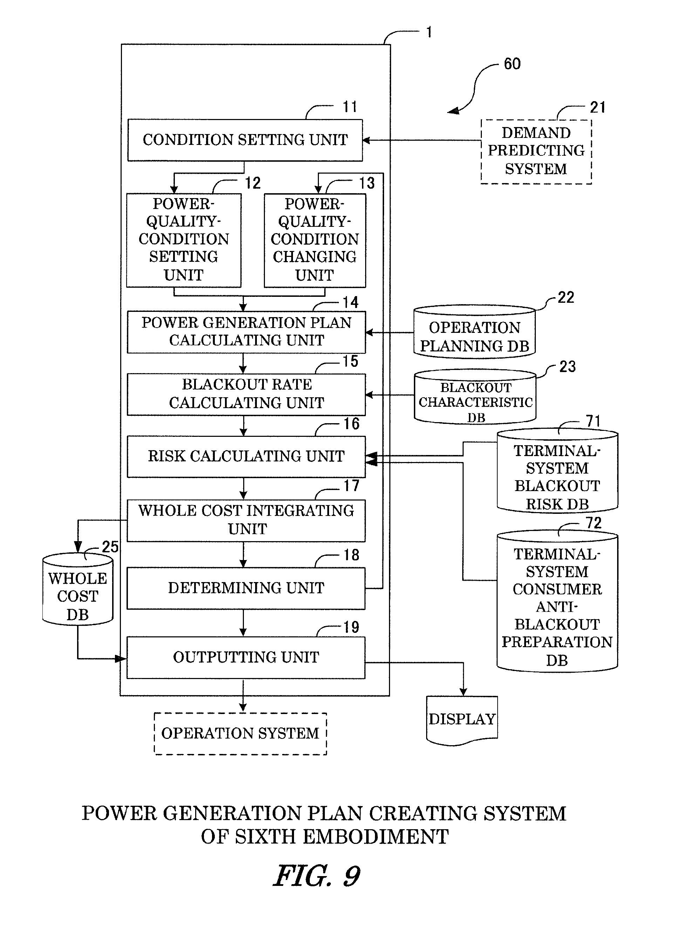

FIG. 9 illustrates a configuration of a power generation plan creating system according to a sixth embodiment. The same structural element as that of the above-explained embodiment will be denoted by the same reference numeral, and the duplicated explanation thereof will be omitted.

A power generation plan creating system 60 of this embodiment employs the same configuration as that of the power generation plan creating system 10 of the first embodiment except that, instead of the blackout risk DB 24, a terminal-system blackout risk DB 71 and a terminal-system consumer anti-blackout preparation DB 72 are provided outside the main block 1.

The terminal-system blackout risk DB 71 and the terminal-system consumer anti-blackout preparation DB 72 store registered information divided for each power transmission and for each terminal system that is opened/closed by a consumer terminal breaker of a power company. For example, data on the damage compensation amount for each blackout time is stored in the database and divided for each terminal system such that JP AA YEN/minute for a system A, JP BB YEN/minute for a system B, and JP CC YEN/minute for a system C.

(Advantageous Effects)

According to the power generation plan creating system 60 of this embodiment, since the blackout risk information is sorted for each terminal system, it becomes possible to create a power generation plan for each terminal system. Hence, when the power demand becomes urgent, an operation that can perform a load interruption on a terminal system in the order of a lower risk is enabled.

(Other Embodiments)

(1) In the respective embodiments described above, databases that are the operation planning DB 22, the blackout characteristic DB 23, the blackout risk DB 24, and the whole cost DB 25 are provided outside the main block 1 or the main block 2, but some of or all of the databases may be provided inside the main block 1 or the main block 2 as needed.

(2) In the fourth embodiment (FIG. 6), the power-quality-plan setting unit 51 that sets the lower limit value of the power quality is provided right next to the power-quality-condition setting unit 12, but the power-quality-condition setting unit 12 may have a function of the power-quality-planning setting unit 51 beforehand.

(3) In the sixth embodiment (FIG. 9), the terminal-system blackout-risk-data updating unit that periodically and automatically updates the registered information in the terminal-system blackout risk DB 71 and the terminal-system consumer anti-blackout preparation DB 72 may be provided outside the main block 1.

(4) Several embodiments of the present disclosure were explained in this specification, but those embodiments are merely presented as examples, and are not intended to limit the scope and spirit of the present disclosure. The above-explained embodiments can be carried out in various other forms, and permit various omissions, replacements, and modifications without departing from the scope and spirit of the present disclosure. Such embodiments and modifications thereof are within the scope and spirit of the present disclosure, and also within an equivalent range to the subject matter as recited in appended claims.

REFERENCE SIGNS LIST

1, 2    Main block
10    Power generation plan creating system

| 11 | Condition setting unit |
|---|---|
| 12 | Power-quality-condition setting unit |
| 13 | Power-quality-condition changing unit |
| 14 | Power-generation-plan calculating unit |
| 15 | Blackout rate calculating unit |
| 16 | Risk calculating unit |
| 17 | Whole cost integrating unit |
| 18 | Determining unit |
| 19 | Outputting unit |
| 20 | Power generation plan creating system |
| 21 | Demand predicting system |
| 22 | Operation planning DB |
| 23 | Blackout characteristic DB |
| 24 | Blackout risk DB |
| 25 | Whole cost DB |
| 30 | Power generation plan creating system |
| 31 | Consumer anti-blackout preparation DB |
| 40 | Power generation plan creating system |
| 41 | Anti-blackout-facility-data updating unit |
| 50 | Power generation plan creating system |
| 51 | Power-quality-planning setting unit |
| 60 | Power generation plan creating system |
| 61 | Blackout-risk-data updating unit |
| 71 | Terminal-system blackout risk DB |
| 72 | Terminal-system consumer anti-blackout preparation DB |

**Claims**

1. A power generation plan creating system for a small-scale power system, the power generation plan creating system comprising:

   a condition setting unit setting a time slot of a power generation plan;
   a power-quality-condition setting unit setting a condition for a frequency fluctuation and for a voltage fluctuation to set a power quality condition;
   a power generation plan calculating unit setting an operation cost based on the set time slot of the power generation plan and the power quality;
   a blackout rate calculating unit calculating a blackout rate for each blackout time;
   a risk calculating unit calculating a blackout risk through a predetermined calculation formula based on the blackout rate calculated by the blackout rate calculating unit; and
   a whole cost integrating unit totaling the blackout risk obtained by the risk calculating unit and the operation cost obtained by the power generation plan calculating unit to integrate a whole cost for each power quality.

2. The power generation plan creating system for a small-scale power system according to claim 1, further comprising an outputting unit selecting and outputting a power quality condition that minimizes the whole cost from whole costs calculated by power quality by the whole cost integrating unit.

3. The power generation plan creating system for a small-scale power system according to claim 1 or 2, further comprising a blackout risk database to be utilized by the risk calculating unit, and storing data on a total damage compensation amount per a blackout time.

4. The power generation plan creating system for a small-scale power system according to any one of claims 1 to 3, further comprising a consumer anti-blackout preparation database to be utilized by the risk calculating unit, and storing data on a risk reduction.

5. The power generation plan creating system for a small-scale power system according to claim 4, further comprising an anti-blackout-facility-data updating unit automatically updating information in the consumer anti-blackout preparation database to latest information.

6. The power generation plan creating system for a small-scale power system according to claim 4, further comprising a blackout-risk-data updating unit automatically updating data in the blackout risk database and information in the consumer anti-blackout preparation database to latest information.

7. The power generation plan creating system for a small-scale power system according to claim 1 or 2, further comprising:

   a blackout risk database to be utilized by the risk calculating unit, and storing data on a total damage compensation amount per a blackout time for each terminal system; and
   a consumer anti-blackout preparation database storing data on a risk reduction for each terminal system.

8. A power generation plan creating method for a small-scale power system, the power generation plan creating method comprising:

   a condition setting step of setting a time slot of a power generation plan;
   a power-quality-condition setting step of setting a condition for a frequency fluctuation and for a voltage fluctuation to set a power quality condition;
   a power generation plan calculating step of setting an operation cost based on the set time slot of the power generation plan and the power quality;
   a blackout rate calculating step of calculating a blackout rate for each blackout time;
   a risk calculating step of calculating a blackout risk through a predetermined calculation formula based on the blackout rate calculated through the blackout rate calculating step;
   a whole cost integrating step of totaling the blackout risk obtained through the risk calculating step and the operation cost obtained through the power generation plan calculating step to integrate a whole cost for each power quality; and
   a whole cost minimizing condition outputting step of selecting and outputting a power quality condition that minimizes the whole cost based on whole costs calculated power quality by power quality through the whole cost integrating step.

POWER GENERATION PLAN CREATING SYSTEM
OF FIRST EMBODIMENT

*FIG. 1*

START

SET CONDITION — S11

SET POWER QUALITY CONDITION — S12

CHANGE POWER QUALITY CONDITION — S19

CALCULATE POWER GENERATION PLAN — S13

CALCULATE BLACKOUT RATE — S14

CALCULATE RISK — S15

INTEGRATE WHOLE COSTS AND STORE DATA — S16

CALCULATION COMPLETED — S17 NO

YES

OUTPUT WHOLE COST MINIMIZING CONDITION — S18

END

POWER GENERATION PLAN CREATING
METHOD OF FIRST EMBODIMENT

*FIG. 2*

FREQUENCY FLUCTUATION
VS BLACKOUT RATE

BLACKOUT
RATE

1 MINUTE

10 MINUTES

1 HOUR

1 DAY

FREQUENCY FLUCTUATION RANGE

VOLTAGE FLUCTUATION
VS BLACKOUT RATE

BLACKOUT
RATE

1 MINUTE

10 MINUTES

1 HOUR

1 DAY

VOLTAGE FLUCTUATION RANGE

BLACKOUT TIME DETERMINATION TABLE
TO SET THE CHARACTERISTIC

| BLACKOUT TIME | EVENT |
|---|---|
| 1 MINUTE | NOT HEAVY MALFUNCTION AND SYSTEM CAN BE SWITCHED |
| 10 MINUTES | HEAVY MALFUNCTION AND SUPPLY THROUGH ANOTHER SYSTEM |
| 1 HOUR | RECOVERED WITH COOPERATION OF CONSUMERS |
| 1 DAY | WHOLE TRANSFORMER STATION FIRED, ETC. |
| . . . | . . . |

RELATIONSHIP BETWEEN FREQUENCY FLUCTUATION
ALLOWABLE RANGE AND BLACKOUT RATE, AND, RELATIONSHIP
BETWEEN VOLTAGE FLUCTUATION ALLOWABLE RANGE AND
BLACKOUT RATE

*FIG. 3*

13

POWER GENERATION PLAN CREATING SYSTEM
OF SECOND EMBODIMENT

*FIG. 4*

POWER GENERATION PLAN CREATING SYSTEM
OF THIRD EMBODIMENT

*FIG. 5*

POWER GENERATION PLAN CREATING SYSTEM
OF FOURTH EMBODIMENT

*FIG. 6*

FREQUENCY
FLUCTUATION

TIME

VOLTAGE
FLUCTUATION

TIME

RELATIONSHIP BETWEEN FREQUENCY
FLUCTUATION AND TIME, AND, RELATIONSHIP
BETWEEN VOLTAGE FLUCTUATION AND TIME

*FIG. 7*

POWER GENERATION PLAN CREATING SYSTEM
OF FIFTH EMBODIMENT

*FIG. 8*

POWER GENERATION PLAN CREATING SYSTEM
OF SIXTH EMBODIMENT

*FIG. 9*

## INTERNATIONAL SEARCH REPORT

International application No.

PCT/JP2013/076680

| A. CLASSIFICATION OF SUBJECT MATTER |
|---|
| *H02J3/00(2006.01)i, G06Q50/06(2012.01)i* |

According to International Patent Classification (IPC) or to both national classification and IPC

| B. FIELDS SEARCHED |
|---|
| Minimum documentation searched (classification system followed by classification symbols)<br>H02J3/00, G06Q50/06 |

Documentation searched other than minimum documentation to the extent that such documents are included in the fields searched

Jitsuyo Shinan Koho 1922–1996 Jitsuyo Shinan Toroku Koho 1996–2013
Kokai Jitsuyo Shinan Koho 1971–2013 Toroku Jitsuyo Shinan Koho 1994–2013

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-161913 A (Toshiba Corp.),<br>22 July 2010 (22.07.2010),<br>entire text; all drawings<br>(Family: none) | 1-8 |
| A | JP 2002-34151 A (Mitsubishi Electric Corp.),<br>31 January 2002 (31.01.2002),<br>entire text; all drawings<br>(Family: none) | 1-8 |
| A | JP 2002-51465 A (Toshiba Corp.),<br>15 February 2002 (15.02.2002),<br>paragraphs [0037] to [0038]<br>(Family: none) | 1-8 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 December, 2013 (10.12.13) | Date of mailing of the international search report<br>24 December, 2013 (24.12.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/076680 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2010-20434 A  (Shimizu Corp.), 28 January 2010 (28.01.2010), entire text; all drawings (Family: none) | 1-8 |

Form PCT/ISA/210 (continuation of second sheet) (July 2009)

**EP 2 905 862 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4435101 B